# EUROPEAN PATENT APPLICATION

(11) **EP 4 806 575 A1**
(43) Date of publication of application: **16.09.2026**
(21) Application number: 24887537.9
(22) Date of filing: 15.08.2024
(51) Int. Cl.: B23K 20/10

(54) **CONTINUOUS HIGH-STABILITY HIGH-SPEED ULTRASONIC WELDING AUTOMATIC PRODUCTION LINE**

(30) Priority: 09.11.2023 CN 202311496104
(71) Applicant: Sheng Dong Li (Guangzhou) Ultrasonic Electronic Equipment Co., Ltd., Guangzhou, Guangdong 510940 (CN)
(72) Inventor: YAN, Zhuosheng, Guangzhou, Guangdong 510940 (CN); YAN, Zhuoli, Guangzhou, Guangdong 510940 (CN); ZHONG, Xingtao, Guangzhou, Guangdong 510940 (CN); LU, Xiaobin, Guangzhou, Guangdong 510940 (CN); LI, Jingdong, Guangzhou, Guangdong 510940 (CN)
(74) Representative: Zhang, Yanyun
(86) International application number: PCT/CN2024/112400
(87) International publication number: WO 2025/097917

(57) **Abstract**

The present invention discloses a continuous high-stability high-speed ultrasonic welding automatic production line, including a feeding conveying section, a rolling welding section, and a discharging conveying section. The feeding conveying section is connected to an inlet end of the rolling welding section, and an outlet end of the rolling welding section is connected to the discharging conveying section. The rolling welding section comprises a welding conveyor belt and a rolling welding mechanism. The rolling welding mechanism is installed on one side of the welding conveyor belt. A welding unit of the ultrasonic rolling welding mechanism is used for roll-welding workpieces to be welded on the welding conveyor belt during conveying. The beneficial effects of the invention are: improving welding consistency and stability of workpieces, and increasing production capacity and efficiency.

## Description

### FIELD OF THE INVENTION

The present invention relates to the technical field of ultrasonic welding production lines, and specifically to a continuous high-stability high-speed ultrasonic welding automatic production line.

### BACKGROUD OF THE INVENTION

With the rapid development of the new energy vehicle and electric bicycle markets, lithium batteries, as a high-performance, high-energy-density power source, have become an indispensable part of the electric vehicle field. In the manufacturing process of lithium batteries, welding is a crucial process step.

In the prior art, lithium battery welding processes generally adopt either resistance welding or laser welding. Resistance welding requires cleaning the welding surface to remove oxides and dirt; then clamping the welding portion with electrode pliers, heating the resistance coil in the electrode pliers to heat the welding electrode to its melting point, while applying a certain pressure during heating to fuse them together; and finally cooling. This process is complicated, energy-consuming, and has low working efficiency. Laser welding uses high-frequency pulses to apply instantaneous high-temperature and high-pressure current on the surface of the electrodes to be welded, causing rapid melting and forming a strong connection between the electrodes. Laser welding has the advantages of simple process flow, high precision, high welding quality, and high working efficiency, and is currently the mainstream process. However, laser welding also has the disadvantages of high equipment cost and high usage cost.

Ultrasonic welding uses ultrasonic vibration and the heat generated thereby to perform welding. The ultrasonic vibration expels the air between the surface of the metal material and the substrate, forming welding spots. Ultrasonic welding is relatively flexible and can tightly bond two different material structures together during welding. Ultrasonic welding has low power and small impact on batteries, so it is often used in the production of battery modules and ordinary batteries. Existing ultrasonic welding generally has low process cost, but compared with laser welding, its speed and efficiency are lower, and production line capacity is low, thus limiting its application.

Chinese invention patent application with publication No. CN114226945A discloses an ultrasonic welding device and a continuous welding method, wherein the ultrasonic welding device comprises a material transport assembly, two or more rolling welder assemblies, and at least one backing roller. The material transport assembly is used to transport material to two or more welding stations, the material having a width direction. The two or more rolling welder assemblies are sequentially arranged in the transport direction of the material, each rolling welder assembly comprising a rolling welding head, and the two or more rolling welding heads are staggered along the width direction. At least one backing roller is rotatably arranged in the ultrasonic welding device, and a welding station is defined between the backing roller and the rolling welding head. This ultrasonic welding device and continuous welding method can improve welding efficiency for materials with large width.

Chinese invention patent with publication No. CN 216528958U discloses an integrated composite material rolling welding device, comprising a composite material unwinding mechanism, an upper foil unwinding mechanism, a lower foil unwinding mechanism, an unwinding deviation correction assembly, a rolling welding machine, a winding deviation correction mechanism, a driving mechanism, and a winding mechanism. The upper foil output by the upper foil unwinding mechanism, the composite material output by the composite material unwinding mechanism, and the lower foil output by the lower foil unwinding mechanism are aligned by the unwinding deviation correction assembly, the three aligned materials are roll-welded by the rolling welding machine, the three welded materials are corrected by the winding deviation correction mechanism, and the winding mechanism is used for winding the three welded materials. Tension control mechanisms and speed control mechanisms are respectively provided between the composite material unwinding mechanism and the unwinding deviation correction assembly, between the upper foil unwinding mechanism and the unwinding deviation correction assembly, and between the lower foil unwinding mechanism and the unwinding deviation correction assembly. The invention has a compact structure, helps ensure welding quality, and increases welding speed.

In the prior art, ultrasonic welding in the field of power batteries is generally used in battery pre-welding and final welding processes. The existing ultrasonic pre-welding equipment at pre-welding and final welding stations has low production capacity, typically 12-15 PPM per minute. Production lines with many pre-welding and final welding stations can achieve a maximum of 20-30 PPM. The welding speed is slow and efficiency is low. The main reason is that the existing ultrasonic pre-welding and final welding production lines use spot welding ultrasonic welding. Due to the limited welding area of ultrasonic spot welding, when encountering large-capacity, large-area welding processes, a single-side multi-spotwelding process or a single-side multi-station approach is generally used to meet the requirements of large-capacity and large-area welding processes. Therefore, the welding speed is slow and efficiency is low, which seriously affects the production capacity of the production line.

In summary, in the above prior art, although rolling welding is used to replace spot welding to improve welding efficiency, existing production lines have a phenomenon of stopping when welding the next spot, and cannot achieve a continuous and uniform welding speed. Therefore, the corresponding production lines have the disadvantages of low overall working efficiency, single product type for welding, and being unfavorable for capacity expansion.

### SUMMARY OF THE INVENTION

The object of the present invention is to address the deficiencies of the above prior art and to provide a continuous high-stability high-speed ultrasonic welding automatic production line, which, while improving the consistency and stability of ultrasonic welding of workpieces, greatly increases the welding capacity of the production line per unit time and expands the types of products that can be welded on the production line.

The technical solution adopted by the present invention to solve its technical problem is: a continuous high-stability high-speed ultrasonic welding automatic production line, comprising a feeding conveying section, a rolling welding section, and a discharging conveying section, wherein the feeding conveying section is connected to an inlet end of the rolling welding section, and an outlet end of the rolling welding section is connected to the discharging conveying section; the rolling welding section comprises a welding conveyor belt and a rolling welding mechanism, the rolling welding mechanism is installed on one side of the welding conveyor belt, and a welding unit of the ultrasonic rolling welding mechanism is used for rapidly roll-welding workpieces to be welded (battery cells to be welded) on the welding conveyor belt during conveying.

The feeding conveying section comprises a loading robotic arm and a feeding conveyor belt, the loading robotic arm is installed at a start end of the feeding conveyor belt, and a terminal end of the feeding conveyor belt is connected to the inlet end of the rolling welding section; the discharging conveying section comprises a loading robotic arm and a discharging conveyor belt, the loading robotic arm is installed at a terminal end of the discharging conveyor belt, and a start end of the discharging conveyor belt is connected to the outlet end of the rolling welding section.

The rolling welding section further comprises a housing, the welding conveyor belt passes through the housing, the ultrasonic rolling welding mechanisms are respectively provided on opposite sides of the welding conveyor belt, or two sets of the ultrasonic rolling welding mechanisms are provided on the same side of the welding conveyor belt.

Preferably, three sets of the rolling welding mechanisms are provided, two of which are located on the same side of the welding conveyor belt, and the other one is located on the other side of the welding conveyor belt.

Preferably, the feeding conveying section further comprises a shaping and guiding device matched with the ultrasonic rolling welding mechanism, the shaping and guiding device is arranged inside the housing at a side of the welding conveyor belt, the ultrasonic rolling welding mechanism is installed on a base, and the welding unit is placed in a welding zone of the shaping and guiding device.

A conveying auxiliary mechanism is provided above the welding conveyor belt, the conveying auxiliary mechanism comprising a driving motor set, a rotary press belt, a support frame, a mounting plate, pressing wheels, belt tensioning wheels, and a driving synchronous wheel; the support frame is mounted at a lower portion of the mounting plate, and the belt tensioning wheels are respectively provided at two ends thereof; the driving synchronous wheel is installed at one end of the support frame, and a driven synchronous wheel is provided at the other end of the support frame; a plurality of the pressing wheels are installed on a pressing wheel bracket at a bottom of the support frame; the rotary press belt is installed in belt grooves of the belt tensioning wheels, the driving synchronous wheel, the driven synchronous wheel, and the pressing wheels; the driving synchronous wheel is fixed on a rotating shaft, and the rotating shaft is connected to an output shaft of the driving motor set.

The belt tensioning wheels are mounted on an adjustable frame, one end of the adjustable frame is fixed to the support frame, an adjustment slot is provided on the adjustable frame, and the belt tensioning wheels are mounted on a support shaft disposed in the adjustment slot.

An adjustment device and a vertical adjustment device are provided between the support frame and the mounting plate.

The ultrasonic rolling welding mechanism comprises a welding unit, and the welding unit comprises a first rolling welding die (driving roller) and a second rolling welding die (driven roller) cooperating with each other. The first rolling welding die and the second rolling welding die are located in a welding zone of the shaping and guiding device, where the electrodes of the battery that have been clamped, pressed, and shaped by the shaping and guiding device are roll-welded, thereby effectively improving welding efficiency and yield.

The ultrasonic rolling welding mechanism comprises a welding unit, and the welding unit comprises a first rolling welding die and a second rolling welding die cooperating with each other. The first rolling welding die and the second rolling welding die are located in a welding zone of the shaping and guiding device, where the electrodes of the battery that have been clamped, pressed, and shaped by the shaping and guiding device are roll-welded, thereby effectively improving welding efficiency and yield.

The shaping and guiding device comprises a support plate, a first press belt guiding unit, and a second press belt guiding unit; a window is provided in a middle portion of the support plate for serving as a welding zone for mounting the welding unit; the first press belt guiding unit and the second press belt guiding unit are installed on the same side of the support plate; guiding press belts of the first press belt guiding unit and the second press belt guiding unit move toward each other and are in surface contact with a certain pressure.

The first press belt guiding unit comprises a guiding press belt, a tensioning wheel, idler wheels, and a first pressing wheel; two idler wheels are provided, respectively and laterally located on an upper side of the first pressing wheel; the tensioning wheel is located above the first pressing wheel; the guiding press belt is installed in belt mounting grooves of the tensioning wheel, the idler wheels, and the first pressing wheel; the second press belt guiding unit comprises a guiding press belt, a tensioning wheel, idler wheels, and a second pressing wheel; two idler wheels are provided, respectively and laterally located on a lower side of the second pressing wheel; the tensioning wheel is located below the second pressing wheel; the guiding press belt is installed in belt mounting grooves of the tensioning wheel, the idler wheels, and the second pressing wheel; the first press belt guiding unit and the second press belt guiding unit are arranged on the support plate in a vertically cooperating manner, and the first pressing wheel is in contact with the second pressing wheel.

The tensioning wheel is mounted on a first adjustable base fixed to the support plate, so as to adjust the position of the tensioning wheel, thereby adjusting the tightness of the guiding press belt.

The guiding press belt is composed of a first press belt and a second press belt, wherein the second press belt is located on an inner side close to the support plate, and the second press belt is wider than the first press belt.

The width of the first press belt is 1-5 mm, the width of the second press belt is 8-20 mm, and a welding gap reserved between the first press belt and the second press belt is 2-8 mm.

The mutually cooperating first rolling welding die and second rolling welding die of the welding unit are respectively located on the upper and lower sides of the guiding press belt, and the welding spot is located in the welding gap reserved between the first press belt and the second press belt, so that the upper and lower ultrasonic rolling welding dies simultaneously perform ultrasonic welding from the upper and lower sides, making the welding more reliable and extremely efficient.

A shaping belt is provided between the pressing wheel units at the two ends and the idler wheels for connection, the shaping belt is located in the middle belt grooves of the first pressing wheel and the second pressing wheel of the pressing wheel units, and the shaping belt fills the welding gap reserved between the first press belt and the second press belt.

The first pressing wheel and the corresponding second pressing wheel constitute a pressing wheel unit. The pressing wheel unit comprises a fixed carrier plate, bearing seats, a first pressing wheel, a second pressing wheel, a first driving synchronous wheel, and a second driving synchronous wheel. An installation slot is provided on the fixed carrier plate, and two bearing seats are respectively installed in the installation slot. The first pressing wheel and the first driving synchronous wheel are respectively installed at two ends of a rotating shaft passing through the bearing seats, located on two sides of the fixed carrier plate.

Compared with the prior art, the beneficial effects of the present invention are: solving the problems of slow production speed and low capacity of existing production lines; the production speed can reach 60 PPM per minute or more, greatly improving the capacity of a single production line; adopting a continuous working mode to achieve uninterrupted production; using an upper and lower double-rolling and double-ultrasonic welding method to solve the problem of unstable welding quality, while increasing speed also achieving improved welding consistency and stability of workpieces; adopting an online assembly line working mode, reducing waiting time, improving production efficiency, thereby achieving the maximum capacity layout of a single production line.

### BRIEF DESCRIPTION OF THE DRAWINGS

Fig. 1 is a first perspective view of a continuous high-stability high-speed ultrasonic welding automatic production line according to the present invention;
Fig. 2 is a second perspective view of the continuous high-stability high-speed ultrasonic welding automatic production line according to the present invention;
Fig. 3 is a third perspective view of the continuous high-stability high-speed ultrasonic welding automatic production line according to the present invention;
Figs. 4-6 are perspective structural views of the rolling welding section;
Fig. 7 is a perspective structural view of the conveying auxiliary mechanism;
Figs. 8-13 are structural views of the shaping and guiding device;
Figs. 14-15 are structural views of the pressing wheel unit; and
Fig. 16 is an internal perspective structural view of the rolling welding section.

### DETAILED DESCRIPTION OF THE INVENTION

The technical solutions of the embodiments of the present invention will be clearly and completely described below with reference to the accompanying drawings. Obviously, the described embodiments are only a part of the embodiments of the present invention, rather than all of the embodiments. Based on the embodiments of the present invention, all other embodiments obtained by a person of ordinary skill in the art without making creative efforts shall fall within the protection scope of the present invention. In the description of the present invention, it should be understood that the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", etc., indicating orientation or positional relationships, are based on the orientation or positional relationships shown in the drawings, and are merely for convenience of describing the present invention and simplifying the description, and are not intended to indicate or imply that the device or element referred to must have a particular orientation, be constructed and operated in a particular orientation, and therefore should not be construed as limiting the present invention.

Furthermore, the terms "first", "second" are used for descriptive purposes only and shall not be understood as indicating or implying relative importance or implying the number of indicated technical features. Thus, a feature defined with "first" or "second" may explicitly or implicitly include one or more of said features. In the description of the present invention, "plurality" means two or more, unless otherwise specifically and definitely defined. In addition, the terms "installed", "connected", "coupled" should be understood in a broad sense, for example, it may be a fixed connection, a detachable connection, or an integral connection; it may be a mechanical connection or an electrical connection; it may be a direct connection or an indirect connection through an intermediate medium, or it may be an internal communication between two elements. For a person of ordinary skill in the art, the specific meanings of the above terms in the present invention can be understood according to specific circumstances.

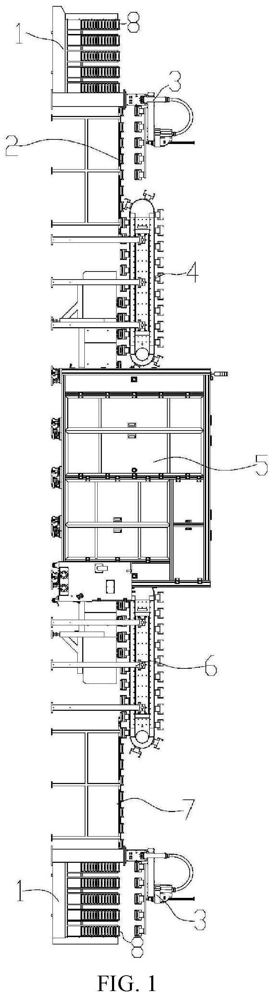

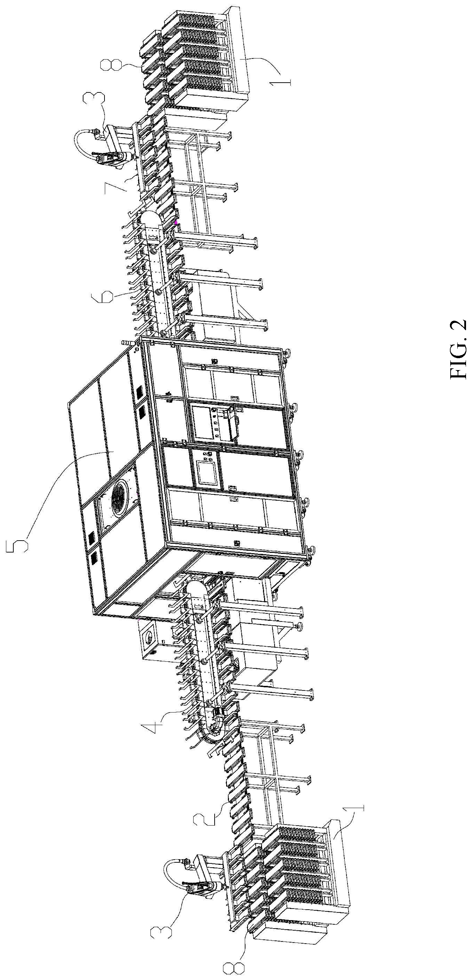

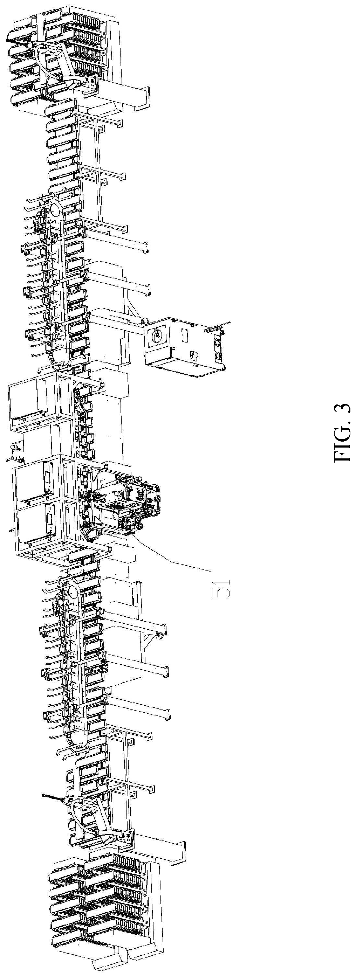

A continuous high-stability high-speed ultrasonic welding automatic production line, as shown in Figs. 1-3, includes a feeding conveying section, a rolling welding section 5, and a discharging conveying section. The feeding conveying section is connected to an inlet end of the rolling welding section, and an outlet end of the rolling welding section is connected to the discharging conveying section. The feeding conveying section comprises a loading robotic arm 3 and a feeding conveyor belt 2, and the loading robotic arm 3 is installed at a start end of the feeding conveyor belt. Workpieces to be welded 8 (battery cells) contained in a feeding device 1 are conveyed within the working range of the loading robotic arm 3. A mechanical gripper on the loading robotic arm 3 can automatically grasp the workpieces to be welded 8 from the feeding device 1 and place them into loading compartments of the feeding conveyor belt 2, which are then conveyed to the inlet end of the rolling welding section 5 and transferred to loading compartments of the welding conveyor belt of the rolling welding section 5.

Preferably, a first rotary transfer robot 4 may be installed between the feeding conveyor belt 2 and the inlet end of the rolling welding section 5. The first rotary transfer robot 4 is provided with suction cups, and the suction cups suck the workpieces to be welded 8 and transfer them to the loading compartments of the welding conveyor belt at the inlet end of the rolling welding section 5.

The discharging conveying section includes a loading robotic arm 3 and a discharging conveyor belt 7. The loading robotic arm 3 is installed at a terminal end of the discharging conveyor belt 7, and a start end of the discharging conveyor belt 7 is connected to the outlet end of the rolling welding section 5. The end of the welding conveyor belt of the rolling welding section 5 transfers the welded workpieces to the discharging conveyor belt 7, which then conveys them to its terminal end. A mechanical gripper on the loading robotic arm 3 automatically grasps the delivered welded workpieces and stacks them on the feeding device 1 for transport to the next section.

Preferably, a second rotary transfer robot 6 may be installed between the outlet end of the rolling welding section 5 and the discharging conveyor belt 7. The second rotary transfer robot 6 is provided with suction cups, and the suction cups suck the welded workpieces and transfer them to the loading compartments at the start end of the discharging conveyor belt 7. The feeding device 1 may be a transport vehicle or other carrying means.

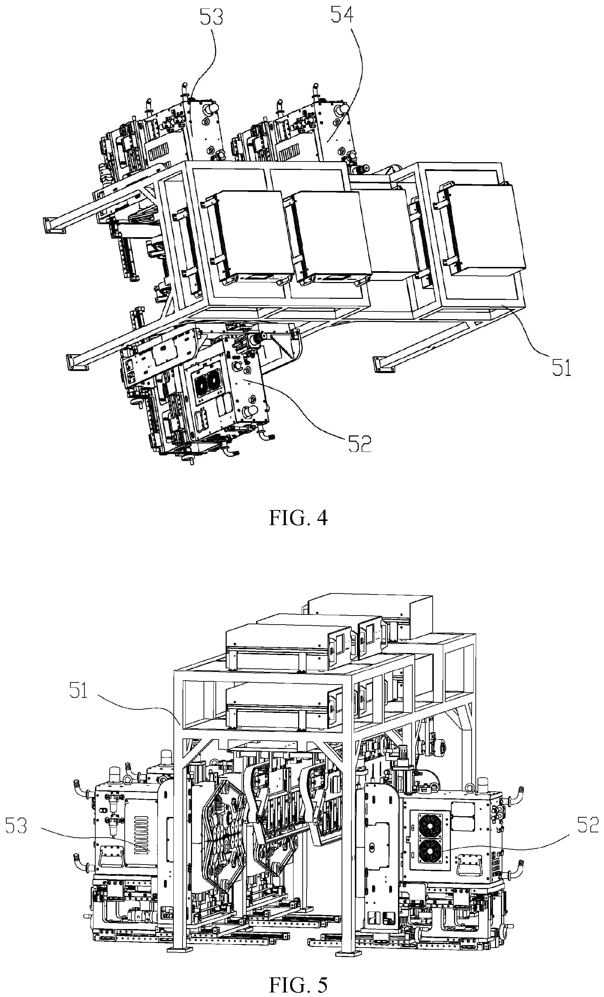

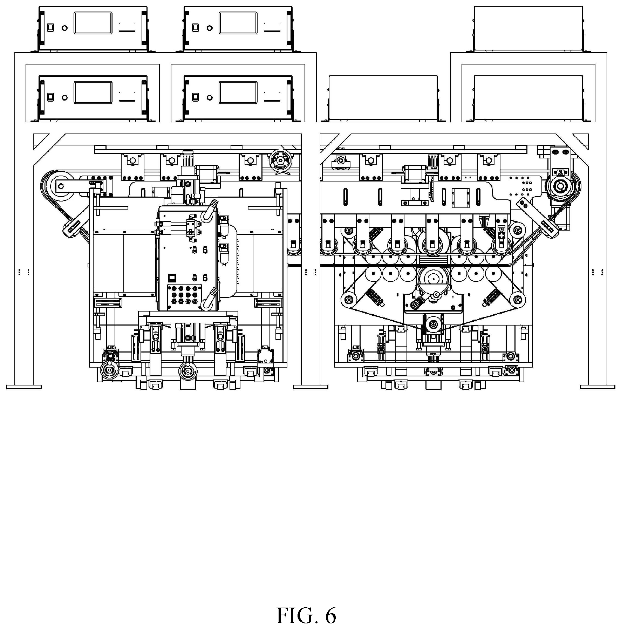

The rolling welding section 5, as shown in Figs. 4-6 and Fig. 16, includes a housing 51, a welding conveyor belt 55 passing through the housing 51, and ultrasonic rolling welding mechanisms (53, 53, 54). The ultrasonic rolling welding mechanisms (53, 53, 54) are installed on one side of the welding conveyor belt 55 inside the housing 51. The welding units of the ultrasonic rolling welding mechanisms (53, 53, 54) rapidly roll-weld the workpieces to be welded 8 on the welding conveyor belt during conveying. Preferably, the ultrasonic rolling welding mechanisms are respectively provided on opposite sides of the welding conveyor belt inside the housing 51, so that two sets of the ultrasonic rolling welding mechanisms (51, 52) can simultaneously perform welding on the same welding conveyor belt 55, effectively doubling welding efficiency. More preferably, two sets of the ultrasonic rolling welding mechanisms (51, 53) are provided on the same side of the welding conveyor belt 55 inside the housing 51, so that when one set is under maintenance or when a die is being replaced, the other set remains in operation, thereby ensuring uninterrupted operation of the production line and improving work continuity and efficiency. The ultrasonic rolling welding mechanisms (53, 53, 54) are installed on a base at a side of the housing 5.

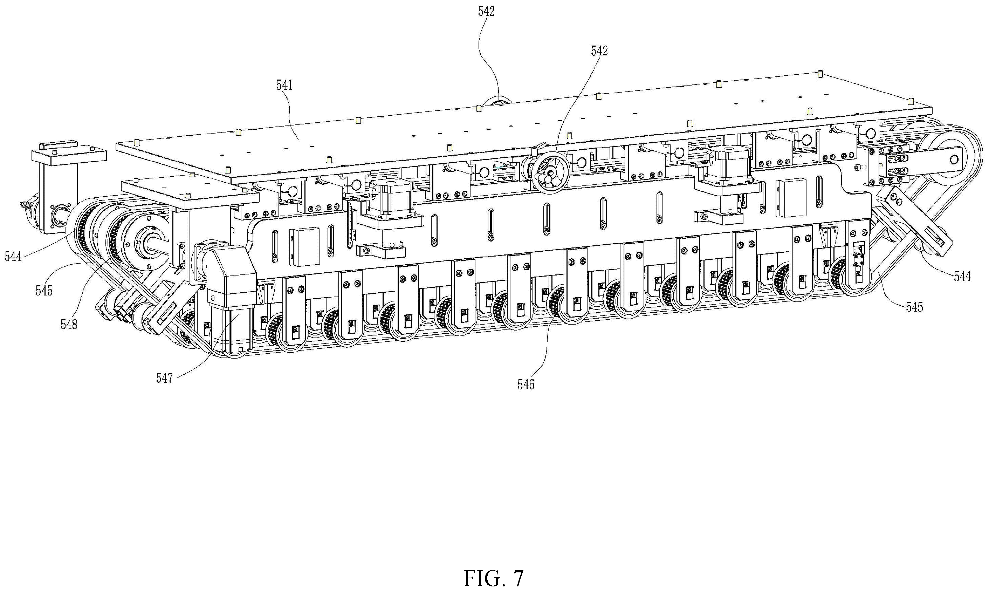

As shown in Figs. 5-7, a conveying auxiliary mechanism is provided above the welding conveyor belt 55 for fixing the workpieces to be welded 8 on the welding conveyor belt 55 during conveying and welding, so as to avoid vibration or displacement during conveying and welding that could affect the welding effect, thereby effectively improving yield and welding speed. The conveying auxiliary mechanism includes a driving motor set 547, a rotary press belt 545, a support frame, a mounting plate 541, pressing wheels 546, belt tensioning wheels 544, and a driving synchronous wheel 548, and the like. The support frame is mounted at a lower portion of the mounting plate 541, and belt tensioning wheels 544 are respectively provided at two ends thereof for adjusting the tightness of the rotary press belt 545. The belt tensioning wheels 544 are mounted on an adjustable frame. One end of the adjustable frame is fixed to the support frame, and an adjustment slot is provided on the adjustable frame. The belt tensioning wheels 544 are mounted on a support shaft disposed in the adjustment slot. Preferably, the adjustable frame may have a "U"-shaped configuration, and the rotary press belt 545 is located inside the belt tensioning wheels 544, within the "U"-shaped slot of the adjustable frame, which provides very good protection for the rotary press belt 545, improves reliability, and reduces installation space. The driving synchronous wheel 548 is installed at one end of the support frame, and a driven synchronous wheel is provided at the other end of the support frame. A plurality of the pressing wheels 546 are installed on a pressing wheel bracket at a bottom of the support frame. The rotary press belt 545 is installed in belt grooves of the belt tensioning wheels 544, the driving synchronous wheel 548, the driven synchronous wheel, and the pressing wheels 546. The driving synchronous wheel 548 is fixed on a rotating shaft, and the rotating shaft is connected to an output shaft of the driving motor set 547. The driving motor set 547 drives the driving synchronous wheel 548 to rotate the rotary press belt 545. An elastic member is provided between the pressing wheel bracket and the pressing wheels 546 to give the pressing wheels 546 a certain amount of elastic expansion and contraction, thereby protecting the workpieces to be welded 8.

An adjustment device 542 is provided between the support frame and the mounting plate 541 for lateral position adjustment, thereby precisely positioning the rotary press belt 545. Preferably, the adjustment device 542 may be a hand-crank adjustment device, by cranking a handle of the hand-crank adjustment device, the relative position between the rotary press belt 545 and the loading compartments on the welding conveyor belt can be adjusted.

A vertical adjustment device is provided between the support frame and the mounting plate 541, for adjusting the vertical position between the rotary press belt 545 and the welding conveyor belt 55. Preferably, the vertical adjustment device may be a stepping electric cylinder, for vertical position adjustment, thereby precisely positioning the rotary press belt 545.

Preferably, the rotary press belt 545 and the welding conveyor belt 55 run synchronously at the same speed, which can effectively ensure the stability of the workpieces to be welded 8 in the loading compartments during conveying and welding, improving yield and welding reliability.

Preferably, the rotary press belt 545 is a press belt with a soft surface, to avoid causing damage to the surfaces of the workpieces to be welded 8. The outer surface of the rotary press belt 545 contacts the surfaces of the workpieces to be welded 8 on the welding conveyor belt 55 and applies a certain pressure to fix them in the loading compartments on the welding conveyor belt for transport, preventing displacement during conveying, thereby effectively ensuring yield during rapid welding.

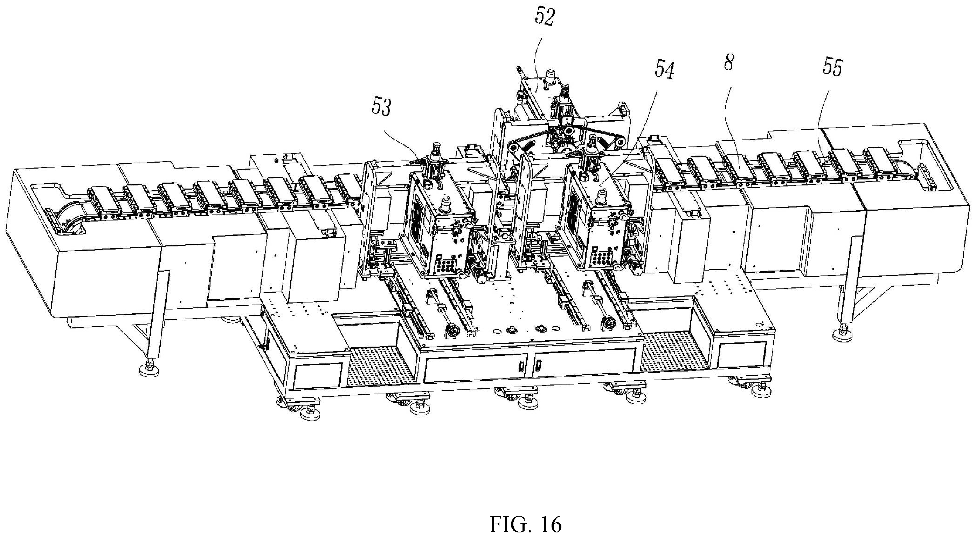

The ultrasonic rolling welding mechanisms (53, 53, 54), as shown in Figs. 5 and 16, are installed on a base at a side bottom end of the welding conveyor belt 55 inside the housing 51. Each includes a welding unit, and the welding unit has a first rolling welding die (driving roller) and a second rolling welding die (driven roller) cooperating with each other. The first rolling welding die and the second rolling welding die are located in a welding zone of the shaping and guiding device, where the electrodes of the battery that have been clamped, pressed, and shaped by the shaping and guiding device are roll-welded, thereby effectively improving welding efficiency and yield.

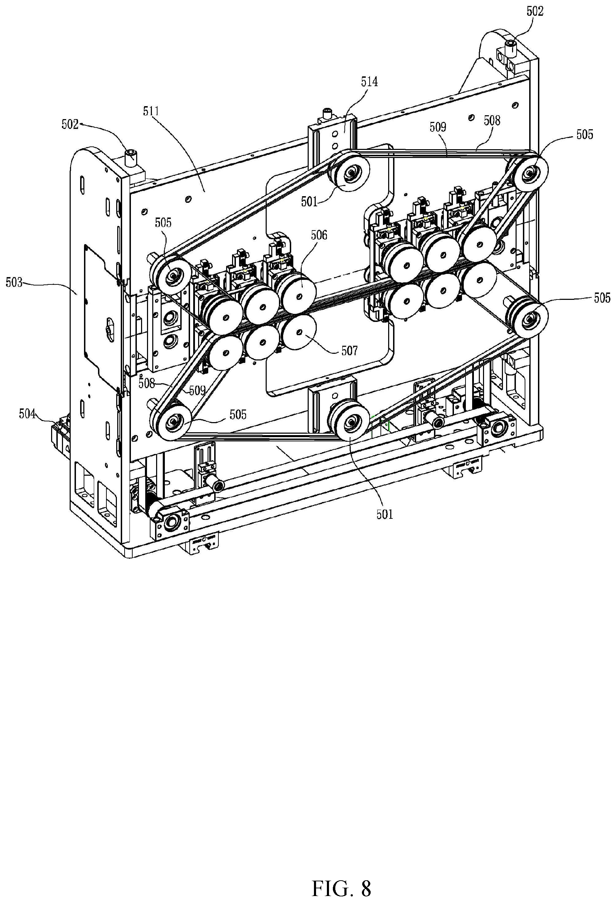

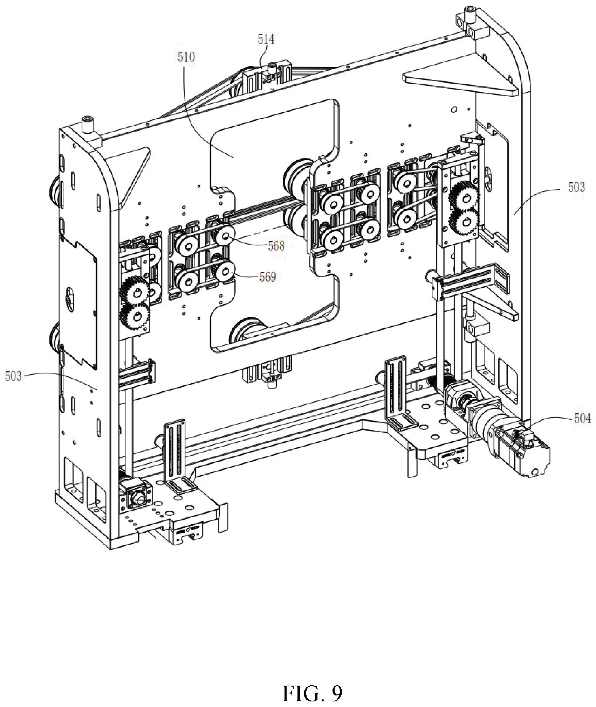

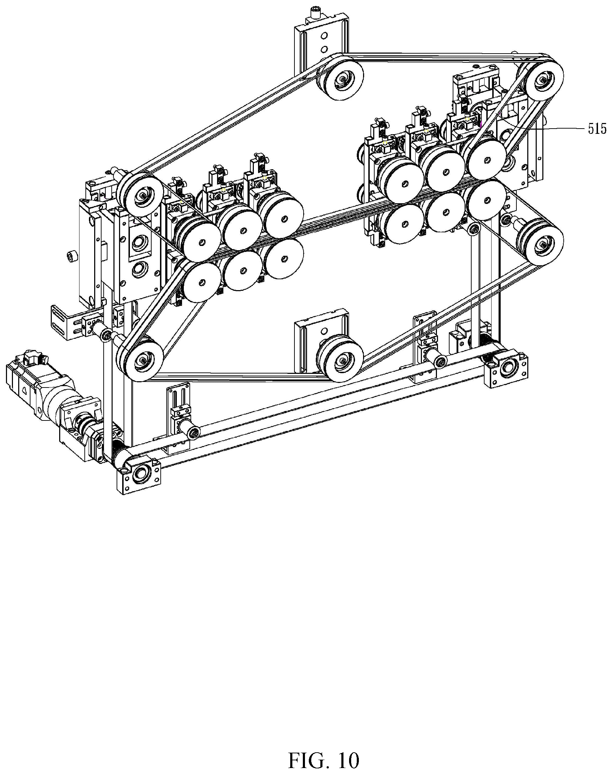

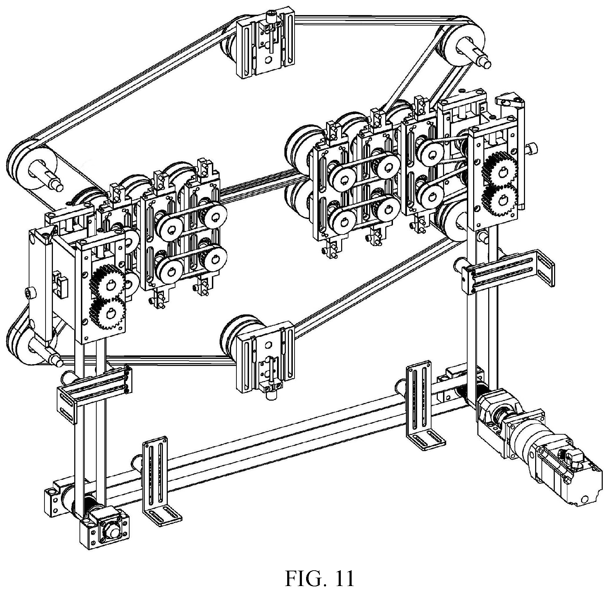

The shaping and guiding device, as shown in Figs. 8-13, includes a support plate 511, a first press belt guiding unit, a second press belt guiding unit, and a motor 504. The first press belt guiding unit and the second press belt guiding unit are installed on the same side of the support plate 511, and the guiding press belts of the first press belt guiding unit and the second press belt guiding unit move toward each other and are in surface contact with a certain pressure. A window 510 is provided in a middle portion of the support plate 511 for serving as a welding zone for mounting the welding unit.

The first press belt guiding unit includes a guiding press belt, a tensioning wheel 501, idler wheels 505, and a first pressing wheel 506. Two idler wheels 505 are provided, respectively and laterally located on an upper side of the first pressing wheel 506. The tensioning wheel 501 is located in the upper middle portion above the first pressing wheel 506. The guiding press belt is installed in belt mounting grooves of the tensioning wheel 501, the idler wheels 505, and the first pressing wheel 506.

The second press belt guiding unit includes a guiding press belt, a tensioning wheel 501, idler wheels 505, and a second pressing wheel 507. Two idler wheels 505 are provided, respectively and laterally located on a lower side of the second pressing wheel 507. The tensioning wheel 501 is located in the lower middle portion below the second pressing wheel 507. The guiding press belt is installed in belt mounting grooves of the tensioning wheel 501, the idler wheels 505, and the second pressing wheel 507.

The first press belt guiding unit and the second press belt guiding unit are arranged on the support plate 511 in a vertically cooperating manner. The first pressing wheel 506 is in contact with the second pressing wheel 507 with pressure, and they are arranged symmetrically with respect to the contact tangent line between the first pressing wheel 506 and the second pressing wheel 507. The contact line between the first pressing wheel 506 and the second pressing wheel 507 lies in the same plane as the travel line of the welding portion of the workpieces to be welded 8 on the welding conveyor belt.

The tensioning wheel 501, idler wheels 505, first pressing wheel 506, and second pressing wheel 507 are fixed to the support plate 511 via bearing seats. Side plates 503 are respectively provided on two sides of the support plate 511, for facilitating the fixing of the support plate 511 inside the housing 51. Angle plate reinforcements are provided between the support plate 511 and the side plates 503, for enhancing the structural strength between the support plate 511 and the side plates 503.

The tensioning wheel 501 is mounted on a first adjustable base 514 fixed to the support plate 511, so as to adjust the position of the tensioning wheel 501, thereby adjusting the tightness of the guiding press belt. The first adjustable base 514 includes a fixing block, a movable slot provided on the fixing block, and a movable block movably installed in the movable slot. The tensioning wheel 501 is mounted on the movable block. The movable block is connected to the fixing block via an adjustment bolt. By cooperating the adjustment bolt with the fixing block, the tensioning wheel 501 is adjusted vertically, thereby adjusting the tightness of the guiding press belt.

Preferably, the guiding press belt is composed of a first press belt 509 and a second press belt 508, wherein the second press belt 508 is located on an inner side close to the support plate 511. The second press belt 508 is wider than the first press belt 509. The width of the first press belt 509 is set according to the front section position and welding position of the workpiece to be welded 8. The width of the second press belt 508 is set according to the positions of the surrounding cover and the welding unit of the ultrasonic rolling welding mechanism. Preferably, the width of the first press belt 509 is 3 mm, and the width of the second press belt 508 is 10 mm. The mutually cooperating first rolling welding die and second rolling welding die of the welding unit are respectively located on the upper and lower sides of the guiding press belt, and the welding spot is located in the welding gap reserved between the first press belt 509 and the second press belt 508, so that the upper and lower ultrasonic rolling welding dies simultaneously perform ultrasonic welding from the upper and lower sides, making the welding more reliable and extremely efficient. The gap between the first press belt 509 and the second press belt 508 is set to 4 mm according to the welding position and the thickness of the welding portions of the first rolling welding die and the second rolling welding die in the welding unit. The workpieces to be welded, under the clamping of the mutually cooperating first press belt 509 and second press belt 508, achieve stable welding during transport, with reliable welding quality, high speed, and almost no welding defects.

An output shaft of the motor 504 is connected to a driving assembly via a belt. The driving assembly includes a driving wheel set and a power steering wheel set, and the driving wheel set and the power steering wheel set are connected by gear engagement to achieve synchronized reverse rotation of the power steering wheel set. The driving wheel set includes a meshing gear fixed on a rotating shaft, a first belt pulley, and a second belt pulley. The power steering wheel set includes a steering meshing gear fixed on a rotating shaft and a third belt pulley. The meshing gear is engaged with the steering meshing gear to achieve synchronized steering rotation. The first belt pulley of the driving wheel set is connected via a belt to a driving wheel fixed on the output shaft of the motor 504. The motor 504 drives the driving wheel set to rotate via the driving wheel, and simultaneously drives the power steering wheel set. The driving wheel set and the power steering wheel set are mounted on a carrier plate, and the carrier plate is fixed to the support plate 511.

The second belt pulley of the driving wheel set is connected via a synchronous belt to a second driving synchronous wheel 569 on the second pressing wheel 507; the third belt pulley of the power steering wheel set is connected via a synchronous belt to a first driving synchronous wheel 568 on the first pressing wheel 506, driving the first pressing wheel 506 and the second pressing wheel 507 to rotate synchronously toward each other.

Preferably, two sets of driving assemblies are provided, including a first driving assembly and a second driving assembly, respectively provided at two end portions of the pressing wheel unit. The first driving assembly and the second driving assembly have the same structure, and their connection to the pressing wheel unit is as described above.

The first belt pulley of the second driving assembly is connected to an intermediate driving wheel. The intermediate driving wheel is fixed on an intermediate shaft, and an intermediate wheel is provided on the intermediate shaft. The intermediate wheel is connected via a belt to the driving wheel on the output shaft of the motor 504. The motor 504 drives the intermediate driving wheel on the intermediate shaft to rotate via the driving wheel, and the intermediate driving wheel drives the first belt pulley. Both the first press belt guiding unit and the second press belt guiding unit are driven by a single motor 504, i.e., each set of the shaping and guiding device is driven by one motor, which effectively saves energy consumption, and the above structure operates more reliably with smaller errors.

A shaping belt is provided between the pressing wheel units and the idler wheels 505 at the two ends for connection. The shaping belt is located in the middle belt grooves of the first pressing wheel 506 and the second pressing wheel 507 of the pressing wheel units. The shaping belt fills the welding gap reserved between the first press belt 509 and the second press belt 508, forming a "bell-mouth" shaped entrance at the ends, which can shape and press the portions to be welded of the workpieces, preventing the welding portions from being caught irregularly in the gap and causing damage to the workpieces. At the same time, as a pre-welding treatment, it can improve welding reliability and ensure yield.

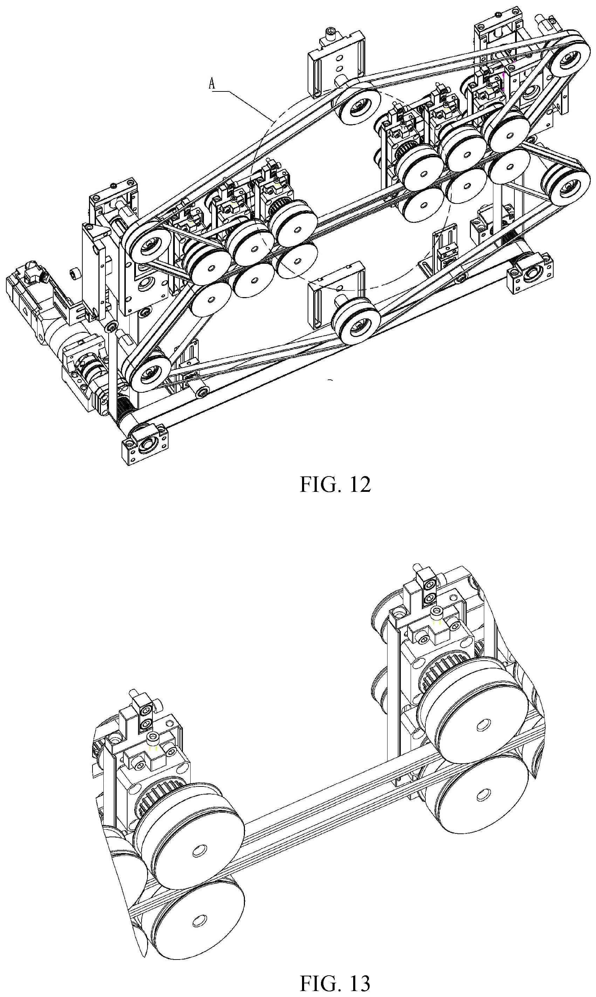

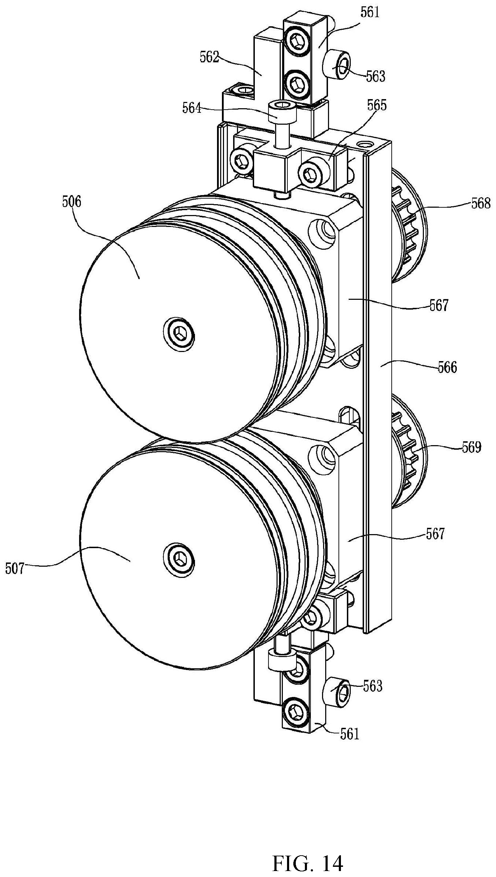

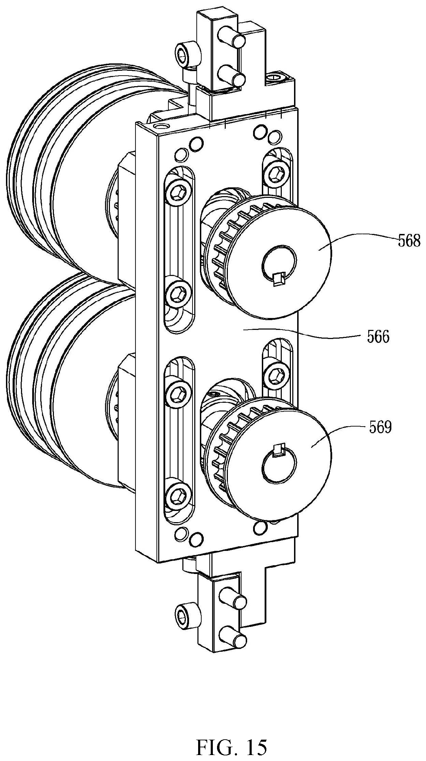

Each first pressing wheel 506 and the corresponding second pressing wheel 507 constitute a pressing wheel unit. The pressing wheel unit includes at least two sets, respectively located on both sides of the welding zone. As shown in Figs. 13-15, the pressing wheel unit includes a fixed carrier plate 566, bearing seats 567, a first pressing wheel 506, a second pressing wheel 507, a first driving synchronous wheel 568, and a second driving synchronous wheel 569. An installation slot is provided on the fixed carrier plate 566, and the two bearing seats 567 are respectively installed in the installation slot. The first pressing wheel 506 and the first driving synchronous wheel 568 are respectively installed at two ends of a rotating shaft passing through the bearing seats 567, located on two sides of the fixed carrier plate 566. Each bearing seat 567 is provided with an adjustment mechanism for adjusting the relative distance between the two bearing seats 567, thereby adjusting the vertical engagement and positioning of the first pressing wheel 506 and the second pressing wheel 507.

Preferably, the adjustment mechanism includes a fixing block 565 and an adjustment bolt 564. The fixing block 565 is fixed on the fixed carrier plate 566. The adjustment bolt 564 passes through a bolt hole cooperating with the fixing block 565 and connects to the bearing seat 567. The adjustment bolt 564, cooperating with the fixing block 565, can be used to finely adjust the vertical position of the bearing seat 567, thereby achieving vertical engagement and positioning of the first pressing wheel 506 and the second pressing wheel 507.

Lateral adjustment mechanisms are respectively provided at the upper and lower ends of the fixed carrier plate 566, for adjusting the synchronous belt tension of the driving synchronous wheels. The lateral adjustment mechanism includes a second fixing block 562 and a slidable block 561. The fixed carrier plate 566 is fixed on the slidable block 561. The second fixing block 562 is provided with a bolt hole. The slidable block 561 is connected via an adjustment bolt through the cooperating bolt hole. The adjustment bolt, cooperating with the second fixing block 562, can be used to finely adjust the lateral position of the fixed carrier plate 566, thereby adjusting the synchronous belt tension of the driving synchronous wheels.

Preferably, at least two pressing wheel units are respectively provided on both sides of the window portion 510 of the support plate 511. The first driving synchronous wheels 569 and second driving synchronous wheels 569 of adjacent pressing wheel units are connected via synchronous belts, so that each of the two pressing wheel units can be in a speed-synchronized state, ensuring welding consistency and stability. Most preferably, three pressing wheel units are respectively provided on both sides of the window portion 510 of the support plate 511, and the first driving synchronous wheels 569 and second driving synchronous wheels 569 of adjacent pressing wheel units are connected via synchronous belts. A fan filter unit (FFU) is provided above the housing 51 to create positive pressure inside the housing, reducing dust contamination inside the housing 51.

The performance parameters achievable by the above technical solution of the present invention are shown in the following table:

| Serial Number | Name | Requirement |
|---|---|---|
| 1 | Conveyor Belt Mechanical Speed | ≥ 12 m/min |
| 2 | Equipment Stable Operating Speed | ≥ 6 m/min |
| 3 | Equipment Welding Efficiency | ≥ 24 PPM |
| 4 | Welding Yield | ≥ 99.5% |
| 5 | Residue | ≥ 60% |
| 6 | Tension | Based on specific product (Reference: 40*10mm weld mark, straight pull, positive electrode ≥ 100N, negative electrode ≥ 90N) |
| 7 | Equipment Large Plate Flatness | ≤ ±0.05mm/m² |
| 8 | Laser Welding Indicators (Reference Evaluation) | Positive electrode penetration depth 0.3-1, weld width ≥ 2mm, tension ≥ 100N; Negative electrode penetration depth 0.16-0.6, weld width ≥ 2mm, tension ≥ 150N |

The welding efficiency of the present invention can reach up to 60 PPM, and the welding yield can be guaranteed to be greater than 99.5%, thus greatly improving the production capacity of a single production line.

The above descriptions are merely preferred embodiments of the present invention and should not be used to limit the scope of implementation of the present invention. That is, any simple equivalent changes and modifications made based on the patent claims and the description content of the present invention shall still fall within the scope covered by the patent of the present invention.

## Claims

1. A continuous high-stability high-speed ultrasonic welding automatic production line, comprising a feeding conveying section, a rolling welding section, and a discharging conveying section, wherein the feeding conveying section is connected to an inlet end of the rolling welding section, and an outlet end of the rolling welding section is connected to the discharging conveying section; the rolling welding section comprises a welding conveyor belt and a rolling welding mechanism, the rolling welding mechanism is installed on one side of the welding conveyor belt, and a welding unit of the rolling welding mechanism is used for roll-welding workpieces to be welded on the welding conveyor belt during conveying.

2. The continuous high-stability high-speed ultrasonic welding automatic production line according to claim 1, wherein the feeding conveying section comprises a loading robotic arm and a feeding conveyor belt, the loading robotic arm is installed at a start end of the feeding conveyor belt, and a terminal end of the feeding conveyor belt is connected to the inlet end of the rolling welding section; the discharging conveying section comprises a loading robotic arm and a discharging conveyor belt, the loading robotic arm is installed at a terminal end of the discharging conveyor belt, and a start end of the discharging conveyor belt is connected to the outlet end of the rolling welding section.

3. The continuous high-stability high-speed ultrasonic welding automatic production line according to claim 1, wherein the rolling welding section comprises a housing, a conveyor belt passing through the housing, and the rolling welding mechanisms, three sets of the rolling welding mechanisms are provided, two of which are located on the same side of the conveyor belt, and the other one is located on the other side of the conveyor belt; each rolling welding mechanism comprises a shaping and guiding device and an ultrasonic rolling welding device, the shaping and guiding device is arranged inside the housing, the ultrasonic rolling welding device is installed outside the housing, and an ultrasonic rolling welding die is placed between two contacting guiding press belts of the shaping and guiding device.

4. The continuous high-stability high-speed ultrasonic welding automatic production line according to claim 3, wherein the rolling welding section further comprises a housing, the welding conveyor belt passes through the housing, the ultrasonic rolling welding mechanisms are respectively provided on opposite sides of the welding conveyor belt, or two sets of the ultrasonic rolling welding mechanisms are provided on the same side of the welding conveyor belt.

5. The continuous high-stability high-speed ultrasonic welding automatic production line according to claim 4, wherein three sets of the rolling welding mechanisms are provided, two of which are located on the same side of the welding conveyor belt, and the other one is located on the other side of the welding conveyor belt.

6. The continuous high-stability high-speed ultrasonic welding automatic production line according to claim 4, wherein the feeding conveying section further comprises a shaping and guiding device matched with the ultrasonic rolling welding mechanism, the shaping and guiding device is arranged inside the housing at a side of the welding conveyor belt, the ultrasonic rolling welding mechanism is installed on a base, and the welding unit is placed in a welding zone of the shaping and guiding device.

7. The continuous high-stability high-speed ultrasonic welding automatic production line according to claim 4, wherein a conveying auxiliary mechanism is provided above the welding conveyor belt, the conveying auxiliary mechanism comprising a driving motor set, a rotary press belt, a support frame, a mounting plate, pressing wheels, belt tensioning wheels, and a driving synchronous wheel; the support frame is mounted at a lower portion of the mounting plate, and the belt tensioning wheels are respectively provided at two ends thereof; the driving synchronous wheel is installed at one end of the support frame, and a driven synchronous wheel is provided at the other end of the support frame; a plurality of the pressing wheels are installed on a pressing wheel bracket at a bottom of the support frame; the rotary press belt is installed in belt grooves of the belt tensioning wheels, the driving synchronous wheel, the driven synchronous wheel, and the pressing wheels; the driving synchronous wheel is fixed on a rotating shaft, and the rotating shaft is connected to an output shaft of the driving motor set.

8. The continuous high-stability high-speed ultrasonic welding automatic production line according to claim 7, wherein the ultrasonic rolling welding mechanism comprises a welding unit, and the welding unit comprises a first rolling welding die and a second rolling welding die cooperating with each other, the first rolling welding die and the second rolling welding die being located in a welding zone of the shaping and guiding device.

9. The continuous high-stability high-speed ultrasonic welding automatic production line according to claim 8, wherein the shaping and guiding device comprises a support plate, a first press belt guiding unit, and a second press belt guiding unit; a window is provided in a middle portion of the support plate for serving as a welding zone for mounting the welding unit; the first press belt guiding unit and the second press belt guiding unit are installed on the same side of the support plate; guiding press belts of the first press belt guiding unit and the second press belt guiding unit move toward each other and are in surface contact.

10. The continuous high-stability high-speed ultrasonic welding automatic production line according to claim 9, wherein the first press belt guiding unit comprises a guiding press belt, a tensioning wheel, idler wheels, and a first pressing wheel; two idler wheels are provided, respectively and laterally located on an upper side of the first pressing wheel; the tensioning wheel is located above the first pressing wheel; the guiding press belt is installed in belt mounting grooves of the tensioning wheel, the idler wheels, and the first pressing wheel; the second press belt guiding unit comprises a guiding press belt, a tensioning wheel, idler wheels, and a second pressing wheel; two idler wheels are provided, respectively and laterally located on a lower side of the second pressing wheel; the tensioning wheel is located below the second pressing wheel; the guiding press belt is installed in belt mounting grooves of the tensioning wheel, the idler wheels, and the second pressing wheel; the first press belt guiding unit and the second press belt guiding unit are arranged on the support plate in a vertically cooperating manner, and the first pressing wheel is in contact with the second pressing wheel.
